(19) Europäisches Patentamt
European Patent Office
Office européen des brevets

(11) EP 4 601 064 A1

(12) **EUROPEAN PATENT APPLICATION**
published in accordance with Art. 153(4) EPC

(43) Date of publication:
**13.08.2025 Bulletin 2025/33**

(21) Application number: **23875160.6**

(22) Date of filing: **27.09.2023**

(51) International Patent Classification (IPC):
***H01M 10/0565*** *(2010.01)* ***H01M 10/052*** *(2010.01)*
***C08G 18/38*** *(2006.01)* ***C08G 18/48*** *(2006.01)*
***C08G 18/10*** *(2006.01)* ***C08G 18/72*** *(2006.01)*
***C08L 75/02*** *(2006.01)*

(52) Cooperative Patent Classification (CPC):
**C08G 18/10; C08G 18/38; C08G 18/48; C08G 18/72; C08L 75/02; H01M 10/052; H01M 10/0565;** Y02E 60/10

(86) International application number:
**PCT/KR2023/014950**

(87) International publication number:
**WO 2024/076096 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.10.2022 KR 20220127083**

(71) Applicants:
- **Kolon Industries, Inc.**
  **Seoul 07793 (KR)**
- **Korea University Research and Business Foundation**
  **Seoul 02841 (KR)**

(72) Inventors:
- **MOON, Jeong Yeol**
  **Seoul 07793 (KR)**
- **CHOE, Han Sol**
  **Seoul 07793 (KR)**
- **KIM, Shin**
  **Seoul 07793 (KR)**
- **SEO, Ji Hun**
  **Seoul 02843 (KR)**
- **KIM, Bit Ga Ram**
  **Seoul 02843 (KR)**

(74) Representative: **Vossius & Partner Patentanwälte Rechtsanwälte mbB**
**Siebertstrasse 3**
**81675 München (DE)**

(54) **SOLID ELECTROLYTE COMPOSITION, SOLID ELECTROLYTE FORMED THEREFROM, AND LITHIUM SECONDARY BATTERY COMPRISING SAME**

(57) A solid electrolyte composition according to the present disclosure comprises an amine-based compound represented by the following Chemical Formula 1; a multifunctional isocyanate; and a lithium salt, wherein the content of the lithium salt is 40 to 80 parts by weight based on 100 parts by weight of the amine-based compound. [Chemical Formula 1] In Chemical Formula 1, $L_1$ and $L_2$ are each independently selected from one or more of a $C_1$-$C_{12}$ alkylene group or heteroalkylene group, a $C_3$-$C_{16}$ cycloalkylene group or cycloheteroalkylene group, a $C_6$-$C_{16}$ arylene group or heteroarylene group, and [Chemical Formula 2], wherein n is a natural number in the range of 1 to 5,000, and m is a natural number in the range of 1 to 200.

【Fig 1】

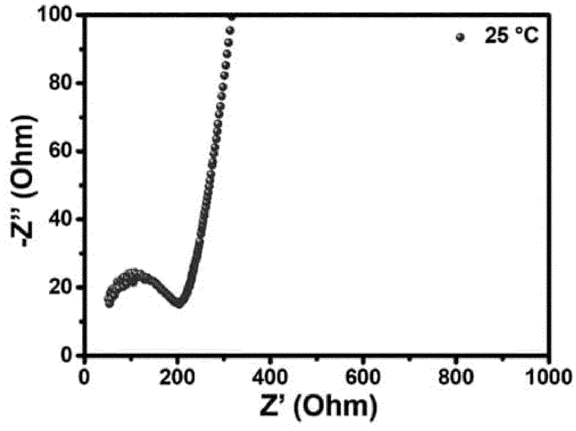


EP 4 601 064 A1

## Description

### TECHNICAL FIELD

The present disclosure relates to a solid electrolyte composition, a solid electrolyte formed therefrom, and a lithium secondary battery including the same. More specifically, it pertains to a solid electrolyte characterized by suppressed crystallization at low temperature, thereby improving the low-temperature output characteristics and electrochemical stability of a secondary battery, as well as a composition constituting the same and a lithium secondary battery including the same.

### BACKGROUND ART

Various approaches are being explored to increase the energy density of lithium-ion batteries, one of which involves using lithium metal as the anode. However, lithium-ion batteries with lithium metal anodes suffer from significant performance degradation due to the lithium dendrite phenomenon that occurs during charge and discharge cycles. Additionally, conventional lithium-ion batteries use flammable liquid electrolytes, resulting in low battery stability. To address this, research and development of all-solid-state batteries employing solid electrolytes with high ionic conductivity and electrochemical stability are being actively pursued.

In general, in all-solid-state batteries, ion-conductive polymers for forming solid electrolytes, such as linear or cross-linked polymers of homopolymers or copolymers based on ethylene oxide as a basic unit, are commonly used. However, these polymers tend to crystallize easily, leading to low ionic conductivity at low temperatures, which degrades the output characteristics and electrochemical properties of all-solid-state batteries.

Therefore, there is a need to develop solid electrolytes that improve output characteristics at low temperatures while maintaining excellent ionic conductivity.

[Prior Art Documents]

[Patent Documents]

(Patent Document 1) Korean Patent Publication No. 10-2023-0018141 (February 7, 2023)

### DISCLOSURE OF THE INVENTION

### TECHNICAL PROBLEM

The present disclosure has been devised to solve the aforementioned problems, and an object of the present disclosure is to provide a solid electrolyte composition and a solid electrolyte formed therefrom, which exhibit improved lithium-ion mobility, suppressed crystallization at low temperatures, excellent ionic conductivity, and superior electrochemical stability.

Another object of the present disclosure is to provide a lithium secondary battery incorporating the above-described solid electrolyte, which offers excellent output characteristics at low temperatures, as well as superior electrochemical stability and safety.

### TECHNICAL SOLUTION

To solve the above problems, the present disclosure provides a solid electrolyte composition including: an amine-based compound represented by the following Chemical Formula 1;

a multifunctional isocyanate; and
a lithium salt;
wherein the content of the lithium salt is 40 to 80 parts by weight based on 100 parts by weight of the amine-based compound.

[Chemical Formula 1]

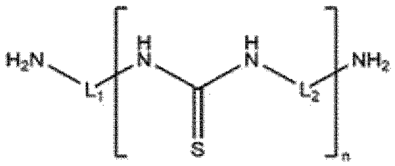

In Chemical Formula 1, each of $L_1$ and $L_2$ independently includes one or more selected from the group consisting of $C_1$-$C_{12}$ alkylene or heteroalkylene groups, $C_3$-$C_{16}$ cycloalkylene or cycloheteroalkylene groups, $C_6$-$C_{16}$ arylene or heteroarylene groups, and

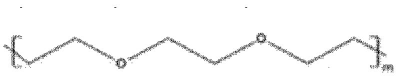;

n is a natural number in the range of 1 to 5,000; and m is a natural number in the range of 1 to 200.

Here, the multifunctional isocyanate may be one or more selected from the group consisting of triphenylmethane-4,4,4-triisocyanate, 1,3,5-triisocyanato-2-methylbenzene, tris(6-isocyanatohexyl) isocyanurate, 1,3,5-triisocyanato-2,4,6-trimethylbenzene, and poly(hexamethylene diisocyanate).

In addition, the content of the multifunctional isocyanate may be 5 to 20 parts by weight based on 100 parts by weight of the amine-based compound.

Meanwhile, the lithium salt may include one or more selected from the group consisting of lithium bis(trifluoromethanesulfonyl)imide (LiTFSI), lithium perchlorate ($LiClO_4$), lithium nitrate ($LiNO_3$), and lithium hexafluorophosphate ($LiPF_6$).

The present disclosure may also provide a solid electrolyte including a cured product of the above-described solid electrolyte composition.

In one example, the solid electrolyte according to the present disclosure may exhibit at least two inflection points in a strain curve as a function of temperature, as measured by dilatometry.

In another example, the solid electrolyte according to the present disclosure may have a topology freezing transition temperature (Tv) higher than its glass transition temperature (Tg), as measured by dilatometry.

In one embodiment of the present disclosure, a lithium secondary battery comprising the aforementioned solid electrolyte, a cathode, and an anode may be provided.

## ADVANTAGEOUS EFFECTS

The solid polymer electrolyte according to the present disclosure can suppress crystallization, improve lithium ion mobility, enhance ion conductivity, and have excellent electrochemical stability, thereby contributing to the stability and output improvement of lithium secondary batteries.

The lithium secondary battery according to the present disclosure has excellent output characteristics at low temperatures, as well as superior electrochemical stability and safety, making it suitable for use in electric vehicles and similar applications.

## BRIEF DESCRIPTION OF THE DRAWINGS

FIG. 1 is a diagram illustrating the Nyquist Plot of the solid electrolyte of Example 1.
FIG. 2 is a diagram illustrating the LSV measurement results of the solid electrolyte prepared in Example 1.
FIG. 3 is a diagram illustrating the LTN measurement results of Example 1.
FIG. 4 is a diagram illustrating a strain curve as a function of temperature, measured by dilatometry, for the solid electrolyte of Example 1.
FIG. 5 is a view illustrating the experimental process of Experimental Example 2.

## BEST MODE FOR CARRYING OUT THE INVENTION

Prior to describing the present disclosure in more detail, the meanings of the terms used in the present

specification are defined.

In the present specification, an "alkyl group" refers to a monovalent aliphatic hydrocarbon group. The alkyl group includes unbranched (linear) and branched forms. When specifying an alkyl group with a specific number of carbon atoms, it means that all geometric isomers having the carbon number are encompassed. Therefore, for example, "butyl" encompasses n-butyl, sec-butyl, isobutyl, tert-butyl, and cyclobutyl, and "propyl" encompasses n-propyl, isopropyl, and cyclopropyl. Examples of the alkyl group include, but are not limited to, one or more selected from the group consisting of methyl, ethyl, propyl, isopropyl, n-butyl, n-pentyl, and n-hexyl.

In the present specification, a "cycloalkyl group" refers to a monovalent aliphatic cyclic hydrocarbon group. Examples of the cycloalkyl group include, but are not limited to, one or more selected from the group consisting of cyclobutyl, cyclopentyl, cyclohexyl, cycloheptyl, cyclooctyl, cyclononyl, and cyclodecyl.

In addition, in the present specification, an "alkylene group" refers to a divalent aliphatic hydrocarbon group. The alkylene group represents one selected from, for example, methylene, ethylene, propylene, butylene, pentylene, and hexylene groups, but are not necessarily limited thereto.

In the present specification, a "cycloalkylene group" refers to a divalent aliphatic cyclic hydrocarbon group, regardless of the positional relationship of the divalent bonding arms. For example, it may be selected from the group consisting of 1,2-cycloalkylene, 1,3-cycloalkylene, 1,4-cycloalkylene, and 1,5-cycloalkylene. Examples of the cycloalkylene group include, but are not limited to, 1,2-cyclobutylene, 1,3-cyclobutylene, 1,2-cyclopentylene, 1,3-cyclopentylene, 1,2-cyclohexylene, 1,3-cyclohexylene, 1,4-cyclohexylene, 1,2-cycloheptylene, 1,3-cycloheptylene, 1,4-cycloheptylene, 1,2-cyclooctylene, 1,3-cyclooctylene, 1,4-cyclooctylene, and 1,5-cyclooctylene.

In this specification, a "heteroalkyl group" means an alkyl group in which one or more carbon atoms in the carbon chain are substituted with a heteroatom.

In the present specification, a "heteroalkylene group" means an alkylene group in which one or more carbon atoms in the carbon chain are substituted with a heteroatom. In addition, a $C_a$-$C_b$ heteroalkylene group refers to a heteroalkylene group having a number of carbon atoms ranging from a to b.

In the present specification, a "cycloheteroalkylene group" means a cycloalkyl group in which one or more carbon atoms in the carbon chain are substituted with a heteroatom.

In the present specification, a "heteroatom" refers to an atom other than carbon or hydrogen, such as oxygen, nitrogen, or sulfur, but is not limited thereto.

In the present specification, an "aryl group" refers to a monovalent aromatic substituent having a conjugated pi ($\pi$) electron system, which may be monocyclic or polycyclic with two or more rings, where all ring elements are carbon atoms. The aryl group includes both substituted and unsubstituted forms. Examples of the aryl group include:

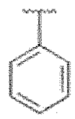 , 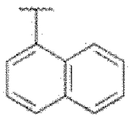 , 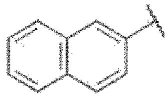 , 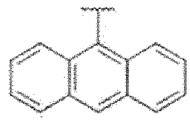 , 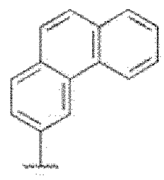 ,

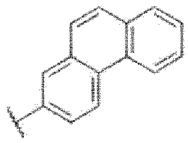 and 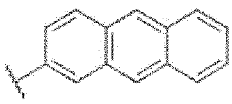

but are not necessarily limited thereto.

In the present specification, an "arylene group" refers to a divalent aromatic substituent, which is a form of the aryl group with an additional bonding arm.

In the present specification, a "heteroaryl group" refers to a monovalent aromatic substituent with a conjugated pi electron system, where at least one of the ring-forming atoms is a heteroatom. Examples of the heteroaryl group include:

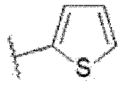 , 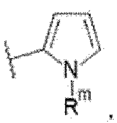 , 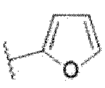 , 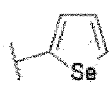 , 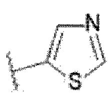 , 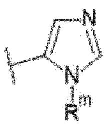 , 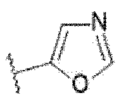 ,

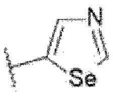, 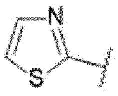, 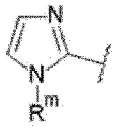, 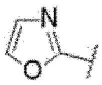, 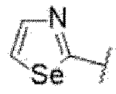, 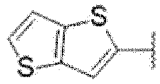, 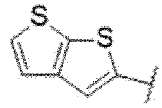,

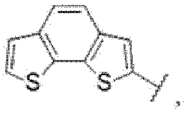, 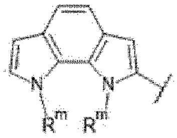, 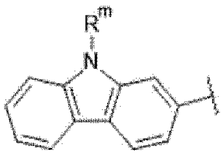, 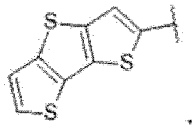, 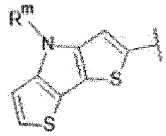,

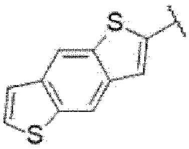, 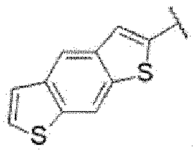, 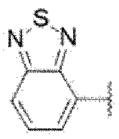, 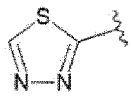, 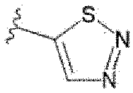 and 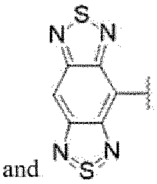

but are not limited thereto.

Here, $R^m$ is H, a $C_1$-$C_{20}$ alkyl group, or a $C_3$-$C_{14}$ heteroaryl group.

In addition, in the present specification, a "heteroarylene group" refers to a divalent aromatic substituent with a conjugated pi electron system, which is a form of the heteroaryl group with an additional bonding arm.

In addition, in the present specification, a "vitrimer" refers to a material that exhibits both the chemical stability of a thermosetting polymer and the processability of a thermoplastic polymer.

In the present specification, the "topology freezing transition temperature (Tv)" refers to the temperature at which a dynamic reversible reaction occurs rapidly in a "vitrimer." Above Tv, the topology can rearrange, while below Tv, the dynamic reversible reaction proceeds very slowly, exhibiting typical thermosetting properties.

Hereinafter, the present disclosure will be described in more detail with reference to specific embodiments. This is not intended to limit the technology described in this specification to specific embodiments, and it should be understood to include various modifications, equivalents, and/or alternatives of the embodiments of the present disclosure. In connection with the description of the drawings, similar reference numerals may be used for similar components.

In the drawings, parts unrelated to the description are omitted to clearly illustrate the present disclosure, the thickness is enlarged to clearly express various layers and regions, and components having the same function within the scope of the same idea can be described using the same reference numerals.

In the present specification, expressions such as "has," "may have," "includes," or "may include" indicate the presence of the corresponding feature (e.g., a component such as a numerical value, function, operation, or part) and do not exclude the presence of additional features.

In the present specification, expressions such as "A or B," "at least one of A and/or B," or "one or more of A and/or B" may include all possible combinations of the listed items together. For example, "A or B," "at least one of A and B," or "at least one of A or B" may refer to all cases including (1) at least one A, (2) at least one B, or (3) both at least one A and at least one B.

Hereinafter, the configuration and effects of the present disclosure will be described in detail.

## 1. Solid Electrolyte Composition

The inventors of the present disclosure have developed this invention to address the problem in conventional solid electrolytes for all-solid-state batteries, where ion-conductive polymers crystallize at low temperatures, significantly reducing ionic conductivity and deteriorating the output of secondary batteries.

In one embodiment of the present disclosure, the solid electrolyte composition according to the present disclosure includes an amine-based compound represented by the following Chemical Formula 1; a multifunctional isocyanate; and a lithium salt, wherein the content of the lithium salt may be 40 to 80 parts by weight based on 100 parts by weight of the amine-based compound.

[Chemical Formula 1].

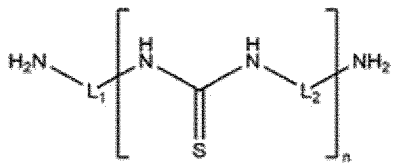

In Chemical Formula 1, each of $L_1$ and $L_2$ independently includes one or more selected from the group consisting of $C_1$-$C_{12}$ alkylene or heteroalkylene groups, $C_3$-$C_{16}$ cycloalkylene or cycloheteroalkylene groups, $C_6$-$C_{16}$ arylene or heteroarylene groups, and

; n is a natural number in the range of 1 to 5,000; and m is a natural number in the range of 1 to 200.

<u>1) Amine-based compound</u>

The solid electrolyte according to the present disclosure may include an amine-based compound represented by the following Chemical Formula 1.

[Chemical Formula 1]

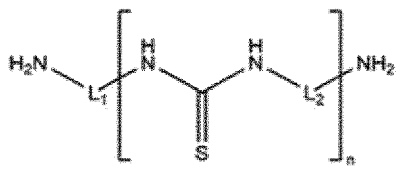

In Chemical Formula 1, each of $L_1$ and $L_2$ independently includes one or more selected from the group consisting of $C_1$-$C_{12}$ alkylene or heteroalkylene groups, $C_3$-$C_{16}$ cycloalkylene or cycloheteroalkylene groups, $C_6$-$C_{16}$ arylene or heteroarylene groups, and

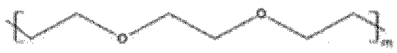;

n is a natural number in the range of 1 to 5,000; and m is a natural number in the range of 1 to 200.

Preferably, in Chemical Formula 1, $L_1$ and $L_2$ may be

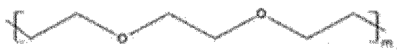,

n may be a natural number in the range of 20 to 3,000, and m may be a natural number in the range of 1 to 10.

Most preferably, the amine-based compound may be represented by the following Chemical Formula 2.

[Chemical Formula 2]

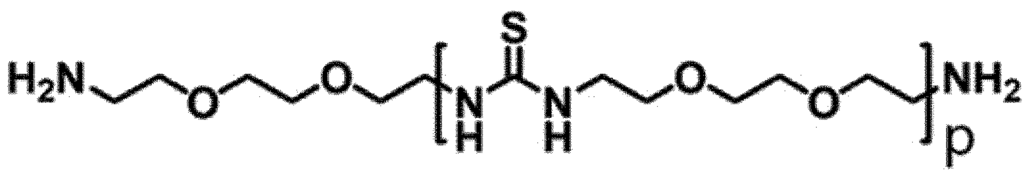

In Chemical Formula 2, p may be a natural number in the range of 1 to 5,000, preferably 20 to 3,000, and more preferably 40 to 2,000.

The amine-based compound may include a thiourea structure in its main chain. The thiourea structure may induce a nonlinear structure through interactions with heteroatoms in the solid electrolyte described later and may form dynamic covalent bonds capable of bond exchange. As a result, an electrolyte formed from a solid electrolyte composition

containing the amine-based compound can exhibit high flexibility and excellent self-healing properties simultaneously.

The weight-average molecular weight of the compound represented by Chemical Formula 1 may be 1,000 to 1,000,000 g/mol, preferably 3,000 to 700,000 g/mol, and more preferably 5,000 to 400,000 g/mol.

When the weight-average molecular weight of the compound represented by Chemical Formula 1 is less than 1,000 g/mol, the mechanical properties of the solid electrolyte may decrease, potentially reducing its electrochemical stability. When it exceeds 1,000,000 g/mol, the ionic conductivity of the electrolyte may decrease, and the degree of crystallization at low temperatures may increase, potentially reducing the battery's output.

2) Multifunctional isocyanate

The solid electrolyte composition according to the present disclosure may include a multifunctional isocyanate. The multifunctional isocyanate may react with the amine groups of the compound of Chemical Formula 1 to form urea bonds and may form a network structure through multiple urea bonds.

In the present disclosure, the multifunctional isocyanate may be one or more selected from the group consisting of triphenylmethane-4,4,4-triisocyanate, 1,3,5-triisocyanato-2-methylbenzene, tris(6-isocyanatohexyl) isocyanurate, 1,3,5-triisocyanato-2,4,6-trimethylbenzene, and poly(hexamethylene diisocyanate), and preferably may be poly(hexamethylene diisocyanate).

In one example, the multifunctional isocyanate in the solid electrolyte composition according to the present disclosure may be present in an amount of 5 to 20 parts by weight based on 100 parts by weight of the amine-based compound, preferably 8 to 18 parts by weight, and more preferably 10 to 15 parts by weight.

If the content of the multifunctional isocyanate is less than 5 parts by weight based on 100 parts by weight of the amine-based compound, it may fail to form a sufficient crosslinking network, potentially preventing the formation of a solid electrolyte. If it exceeds 20 parts by weight, the crosslinking density may become excessively high, potentially resulting in low ionic conductivity.

3) Lithium salt

The lithium salt may be used as an electrolyte salt in a lithium secondary battery. The lithium salt may function as a medium for ion transport and may include lithium cations ($Li^+$) and one or more anions selected from the group consisting of $F^-$, $Cl^-$, $Br^-$, $I^-$, $NO_3^-$, $N(CN)_2^-$, $ClO_4^-$, $BF_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, although it is not necessarily limited thereto.

Examples of the lithium salt include one or more selected from the group consisting of lithium bis(trifluoromethanesulfonyl)imide (LiTFSI), lithium perchlorate ($LiClO_4$), lithium nitrate ($LiNO_3$), and lithium hexafluorophosphate ($LiPF_6$), but are not limited thereto.

The content of the lithium salt may be 40 to 80 parts by weight based on 100 parts by weight of the amine-based compound, preferably 45 to 75 parts by weight, and more preferably 60 to 70 parts by weight.

By including the lithium salt within the above content range, the solid polymer electrolyte composition of the present disclosure may achieve high lithium cation ($Li^+$) ion transport properties (i.e., cation transference number) due to an increased concentration of lithium cations in the composition. In addition, it can reduce lithium-ion diffusion resistance, thereby improving cycle capacity characteristics.

In the present disclosure, when the lithium salt content is less than 40 parts by weight based on 100 parts by weight of the amine-based compound, it may be difficult to secure sufficient ionic conductivity due to the relatively low lithium-ion content. In addition, when the lithium salt content exceeds 80 parts by weight based on 100 parts by weight of the amine-based compound, a significant amount of lithium salt may not be solvated within the polymer matrix and may form ion pairs, resulting in no significant performance improvement and economic disadvantages. Therefore, it is preferable to appropriately adjust the content within the above range according to the intended purpose.

4) Solvent

In a preferred embodiment of the present disclosure, the solid polymer electrolyte composition may further include an organic solvent to adjust viscosity or improve solubility between the monomers used. Examples of usable organic solvents include tetrahydrofuran (THF), 2-methyl tetrahydrofuran, dimethylformamide (DMF), acetonitrile, N-methyl-2-pyrrolidone (NMP), dimethyl sulfoxide (DMSO), dimethylacetamide (DMAc), dichloromethane, acetone, isopropyl alcohol, and methyl ethyl ketone (MEK). However, the solvent is not limited thereto, and one or more of these may be selected and used.

5) Catalyst

In one example, the solid electrolyte composition according to the present disclosure may further include a catalyst, and the catalyst may be a base catalyst.
Examples of the base catalyst include one or more selected from the group consisting of dibutyltin dilaurate, 1,5,7-triazabicyclo[4.4.0]dec-5-ene (TBD), 1,8-diazabicyclo[5.4.0]undec-7-ene (DBU), 1,5-diazabicyclo[4.3.0]non-5-ene (DBN), 4-dimethylaminopyridine (DMAP), triethylamine (TEA), tributylamine (TBA), and trioctylamine (TOA), but are not limited thereto.
When the solid electrolyte composition according to the present disclosure includes a base catalyst, the base catalyst may be included in an amount ranging from 0.1 wt% to 5 wt% based on the total composition.

2. Solid Electrolyte

In addition, the present disclosure provides a solid electrolyte including a cured product of the above-described solid electrolyte composition.
In one example, the solid electrolyte according to the present disclosure may exhibit at least two inflection points in a strain curve as a function of temperature, as measured by dilatometry.
As described above, the solid electrolyte according to the present disclosure may include a network structure formed through dynamic bonding, which may result in properties distinct from those of typical thermosetting polymers. One such property is that the solid electrolyte according to the present disclosure may have two transition temperatures. FIG. 4 illustrates a strain curve as a function of temperature, measured by dilatometry, for a solid electrolyte according to an embodiment of the present disclosure. As shown in FIG. 4, the solid electrolyte according to the present disclosure may exhibit two inflection points in the strain curve as a function of temperature, as measured by dilatometry.
The inflection points may indicate that the solid electrolyte according to the present disclosure exhibits distinct physical properties at different temperatures and may have two transition temperatures. One of these is the glass transition temperature (Tg), at which segmental motion of the polymer chains begins, transitioning from a rigid state to a moldable state. The other is the topology freezing transition temperature (Tv), at which rapid bond exchange occurs, transitioning the polymer from a viscoelastic solid to a viscoelastic liquid. The solid electrolyte according to the present disclosure has a topology freezing transition temperature (Tv), exhibiting characteristics of a so-called vitrimer, and may possess high ionic conductivity along with self-healing capabilities.
In addition, as shown in FIG. 4, in the relationship between the glass transition temperature (Tg) and the topology freezing transition temperature (Tv) measured by dilatometry, the solid electrolyte according to the present disclosure may have a topology freezing transition temperature (Tv) higher than its glass transition temperature (Tg).
The method of preparing the solid polymer is not particularly limited, and the composition may be cured by polymerizing and crosslinking the monomers therein using methods commonly known in the art.
Specifically, the solid electrolyte can be prepared by coating the solid electrolyte composition onto a film or the surface of an electrode and curing the composition by ultraviolet irradiation or heat treatment.
The coating method may utilize known coating techniques such as slot die coating, gravure coating, spin coating, spray coating, roll coating, casting, screen printing, or inkjet printing.
The solid electrolyte prepared by such methods according to the present disclosure may exhibit high ionic conductivity even at low temperatures.

4. Lithium Secondary Battery

The present disclosure also provides a lithium secondary battery including a cathode, an anode, and the solid electrolyte according to the present disclosure.
The lithium secondary battery may be manufactured according to conventional methods known in the art. For example, it may be prepared by applying the solid electrolyte composition onto a cathode, curing the composition, and then laminating an anode.

1) Cathode

The cathode current collector is not particularly limited as long as it has conductivity without causing chemical changes in the battery. Examples include stainless steel, aluminum, nickel, titanium, calcined carbon, or aluminum or stainless steel surface-treated with carbon, nickel, titanium, silver, or the like.
The cathode active material is a compound capable of reversible intercalation and deintercalation of lithium, specifically including a lithium composite metal oxide containing lithium and one or more metals such as cobalt, manganese, nickel, or aluminum. More specifically, the lithium composite metal oxide may include lithium-manganese

oxides (e.g., LiMnO2, LiMn2O4, etc.), a lithium-cobalt-based oxide (e.g., LiCoO2, etc.), a lithium-nickel-based oxide (e.g., LiNiO2, etc.), a lithium-nickel-manganese-based oxide (e.g., LiNil - YMnYO2 (where 0<Y<1), LiMn2-zNizO4 (where 0<Z<2), etc.), a lithium-nickel-cobalt-based oxide (e.g., LiNi1-Y1CoY1O2 (where 0<Y1<1), etc.), a lithium-manganese-cobalt-based oxide (e.g., LiCo1-Y2MnY2O2 (where 0<Y2<1), LiMn2-z1Coz1O4 (where 0<Z1< 2), etc.), a lithium-nickel-manganese-cobalt-based oxide (e.g., Li(NipCoqMnr1)O2 (where 0<p<1, 0<q<1, 0<r1<1, p+q+r1=1) or Li(Nip1-Coq1Mnr2)O4 (where 0<p1< 2, 0<q1< 2, 0<r2<2, pl+q1+r2=2), etc.), or a lithium-nickel-cobalt-transition metal (M) oxide (e.g., Li(Nip2Coq2Mnr3MS2)O2 (where M is selected from the group consisting of Al, Fe, V, Cr, Ti, Ta, Mg, and Mo, and p2, q2, r3, and s2 are atomic fractions of independent elements, respectively, with 0<p2 < 1, 0 < q2 < 1, 0<r3 < 1, 0 < s2 < 1, and p2+q2+r3+s2=1)). The lithium composite metal oxide may include one or more of these compounds.

To enhance battery capacity and stability, the lithium composite metal oxide may be LiCoO2, LiMnO2, LiNiO2, a lithium nickel manganese cobalt oxide (e.g., Li(Ni1/3Mn1/3Co1/3)O2, Li(Ni0.6Mn0.2Co0.2)O2, Li(Ni0.5Mn0.3Co0.2)O2, Li(Ni0.7Mn0.15Co0.15)02, and Li(Ni0.8Mn0.1Co0.1)O2, etc.), or a lithium nickel cobalt aluminum oxide (e.g., Li(Ni0.8Co0.15A10.05)O2, etc.) among the above-mentioned compounds.

The cathode active material may be included in an amount of 80 wt% to 99 wt% based on the total weight of solids in the cathode slurry.

The binder is a component that assists in binding the active material and conductive material and binding to the current collector, typically added in an amount of 1 to 30 wt% based on the total weight of solids in the cathode slurry. Examples of such binders include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluororubber, and various copolymers thereof.

The conductive material is typically added in an amount of 1 to 30 wt% based on the total weight of solids in the cathode slurry.

The conductive material is not particularly limited as long as it has conductivity without causing chemical changes in the battery. Examples include carbon powders such as carbon black, acetylene black (or Denka black), Ketjen black, channel black, furnace black, lamp black, or thermal black; graphite powders such as natural graphite, artificial graphite, or graphite with highly developed crystal structures; conductive fibers such as carbon fibers or metal fibers; metal powders such as carbon fluoride, aluminum, or nickel powder; conductive whiskers such as zinc oxide or potassium titanate; conductive metal oxides such as titanium oxide; and conductive materials such as polyphenylene derivatives.

The cathode slurry may include a solvent. The solvent may include an organic solvent such as N-methyl-2-pyrrolidone (NMP) and may be used in an amount that provides a desirable viscosity when mixed with the cathode active material and optionally a binder and conductive material. For example, the solid content in the slurry, including the cathode active material and optionally the binder and conductive material, may be 50 wt% to 95 wt%, preferably 70 wt% to 90 wt%.

2) Anode

In addition, the anode may be prepared by forming an anode mixture layer on an anode current collector. The anode mixture layer may be formed by coating an anode slurry containing an anode active material, a binder, a conductive material, and a solvent onto the anode current collector, followed by drying and rolling.

The anode current collector generally has a thickness of 3 to 500 μm. The anode current collector is not particularly limited as long as it has high conductivity without causing chemical changes in the battery. Examples include copper, stainless steel, aluminum, nickel, titanium, calcined carbon, copper or stainless steel surface-treated with carbon, nickel, titanium, or silver, and aluminum-cadmium alloys. Like the cathode current collector, the anode current collector may have fine surface irregularities to enhance the adhesion of the anode active material and may be used in various forms such as films, sheets, foils, nets, porous bodies, foams, or nonwoven fabrics.

The anode active material may include at least one selected from the group consisting of lithium metal, carbon materials capable of reversibly intercalating/deintercalating lithium ions, metals or alloys of these metals with lithium, metal composite oxides, materials capable of doping and dedoping lithium, and transition metal oxides.

As carbon materials capable of reversibly intercalating/deintercalating lithium ions, any carbon-based anode active material commonly used in lithium-ion secondary batteries may be used without particular limitation. Representative examples include crystalline carbon, amorphous carbon, or a combination thereof. Examples of crystalline carbon include graphite such as natural or artificial graphite in amorphous, plate-like, flake, spherical, or fibrous forms. Examples of amorphous carbon include soft carbon (low-temperature calcined carbon), hard carbon, mesophase pitch carbide, and calcined coke.

Examples of the metal composite oxides include those selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0\leq x\leq 1$), $Li_xWO_2$ ($0\leq x\leq 1$), and $Sn_xMe_{1-x}Me'_yO_z$ (Me: Mn, Fe, Pb, Ge; Me': Al, B, P, Si, Group 1, 2, or 3 elements of the periodic table, halogens; $0<x\leq 1$; $1\leq y\leq 3$; $1\leq z\leq 8$).

Examples of materials capable of doping and dedoping lithium include Si, $SiO_x$ ($0<x\leq 2$), Si-Y alloys (where Y is an element selected from the group consisting of alkali metals, alkaline earth metals, Group 13 elements, Group 14 elements, transition metals, rare earth elements, and combinations thereof, excluding Si), Sn, $SnO_2$ , and Sn-Y (where Y is an element selected from the group consisting of alkali metals, alkaline earth metals, Group 13 elements, Group 14 elements, transition metals, rare earth elements, and combinations thereof, excluding Sn). Additionally, at least one of these may be mixed with $SiO_2$ . The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

Examples of transition metal oxides include lithium-containing titanium composite oxide (LTO), vanadium oxide, and lithium vanadium oxide.

The anode active material may be included in an amount of 80 wt% to 99 wt% based on the total weight of solids in the anode slurry.

The binder is a component that assists in bonding the conductive material, active material, and current collector, and is typically added in an amount of 1 to 30 wt% based on the total weight of solids in the anode slurry. Examples of such binders include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber, fluororubber, and various copolymers thereof.

The conductive material is a component for further improving the conductivity of the anode active material and may be added in an amount of 1 to 20 wt% based on the total weight of solids in the anode slurry. This conductive material may be the same as or different from the conductive material used in cathode manufacturing. Examples include carbon powders such as carbon black, acetylene black (or Denka black), Ketjen black, channel black, furnace black, lamp black, or thermal black; graphite powders such as natural graphite, artificial graphite, or graphite with highly developed crystal structures; conductive fibers such as carbon fibers or metal fibers; metal powders such as carbon fluoride, aluminum, or nickel powder; conductive whiskers such as zinc oxide or potassium titanate; conductive metal oxides such as titanium oxide; and conductive materials such as polyphenylene derivatives.

The anode active material slurry may further include a solvent. The solvent may include water or an organic solvent such as NMP or alcohol, and may be used in an amount that provides a desirable viscosity when mixed with the anode active material and optionally a binder and conductive material. For example, the solid content in the slurry, including the anode active material and optionally the binder and conductive material, may be 50 wt% to 95 wt%, preferably 70 wt% to 90 wt%.

The lithium secondary battery comprising the above-described cathode, anode, and the solid electrolyte according to the present disclosure maintains the electrochemical stability of the solid polymer electrolyte while suppressing crystallization of the electrolyte at low temperatures. As a result, it prevents significant reductions in battery output at low temperatures and offers the advantages of excellent lithium-ion mobility and ionic conductivity.

## MODE FOR CARRYING OUT THE INVENTION

Hereinafter, the present disclosure will be described in more detail with reference to specific examples. However, this does not mean that the scope of the present disclosure is limited to the scope of these examples. The examples are provided merely as specific applications of the invention to aid understanding, and those skilled in the art will understand that various modifications, deletions, or additions to the configurations within the scope of the claims can be made to implement the same technical concept.

### Preparation Example: Synthesis of Thiourea Compound

To a vial equipped with a magnetic stir bar, 50 mL of DMF (N,N-Dimethylformamide, anhydrous) and 15.5 g of BAEE (1,2-bis(2-aminoethoxy)ethane) were sequentially added. Then, 17.8 g of TCDI (1,1'-thiocarbonyldiimidazole) was added under stirring. The flask was sealed and stirred at 25°C for 24 hours. The solution was diluted with 100 mL of chloroform and precipitated in an excess of ether (1.5 L). The dissolutionprecipitation process was repeated three times. The resulting precipitate was degassed and dried under vacuum at 140°C overnight to yield a yellow solid (13 g, 65% yield, PTU). The weight-average molecular weight of the obtained solid was approximately 14,000 g/mol.

### Example 1

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.025 g (12.5 parts by weight) of PHDI (polyhexamethylene diisocyanate, viscosity 1,300-2,200 cP at 25°C) and 0.001 g of DD (dibutyltin

dilaurate) were added and mixed uniformly, followed by the addition of 0.125 g (62.5 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Example 2

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.025 g (12.5 parts by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.16 g (80 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Example 3

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.025 g (12.5 parts by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.08 g (40 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Example 4

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.01 g (5 parts by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.125 g (62.5 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Example 5

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.04 g (20 parts by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.125 g (62.5 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Comparative Example 1

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.025 g (12.5 parts by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.18 g (90 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Comparative Example 2

A polymer electrolyte was prepared by adding an isocyanate crosslinking agent and a lithium salt to polythiourea.

PTU (0.2 g, 100 parts by weight) prepared in the Preparation Example was dissolved in 2 mL of DMF. Then, 0.025 g (12.5 parts by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.06 g (30 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Comparative Example 3

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.002 g (1 part by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.125 g (62.5 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Comparative Example 4

A polymer electrolyte was prepared by adding an isocyanate crosslinking agent and a lithium salt to polythiourea. PTU (0.2 g, 100 parts by weight) prepared in the Preparation Example was dissolved in 2 mL of DMF. Then, 0.06 g (30 parts by weight) of PHDI (polyhexamethylene diisocyanate, viscosity 1,300-2,200 cP at 25°C) and 0.001 g of DD (dibutyltin dilaurate) were added and mixed uniformly, followed by the addition of 0.125 g (62.5 parts by weight) of LiTFSI (lithium bis(trifluoromethanesulfonyl)imide). The solution was cast onto a Teflon plate (2x4 $cm^2$), degassed, and dried in a vacuum oven at 30°C. It was then vacuum-dried at 60°C for 24 hours and cured at 100°C for 24 hours to produce a 150 μm thick solid electrolyte film.

## Comparative Example 5

Using polyethylene oxide (PEO, Mw 400,000) as an ion-conductive polymer and LiTFSI as a lithium salt, 0.2 g (100 parts by weight) of PEO and 0.125 g (62.5 parts by weight) of LiTFSI were mixed. The mixture was mechanically blended using a ball mill and pressed at a pressure of 9,000 kgf, a temperature of 170°C, and a duration of 10 minutes to produce a 150 μm thick solid electrolyte film.

## Experimental Example 1: Evaluation of Electrochemical Properties

1) Measurement of Ionic Conductivity

The ionic conductivity of the prepared polymer electrolytes was calculated using Equation 1 through electrochemical impedance spectroscopy (EIS). Measurements were conducted in a frequency range of 1 MHz to 1 Hz with an alternating current amplitude of 10 mV. For the measurement, a solid electrolyte film was sandwiched between two stainless steel (SUS) plates to fabricate a symmetrical cell (SS/SPE/SS) in the form of a CR2032 coin cell. The impedance of the CR2032 coin cell was measured using an Ivium n-Stat electrochemical analyzer. The bulk electrolyte resistance was determined from the intersection of the impedance trajectory's semicircle or straight line with the real axis, and the ionic conductivity of the solid electrolyte film was calculated based on the sample's area and thickness. The Nyquist plot of the solid electrolyte of Example 1 is shown in FIG. 1, and the ionic conductivities of the solid electrolytes of Examples 1 to 5 and Comparative Examples 1 to 5, calculated using Equation 1, are presented in Table 1 below.

[Equation 1]

$$\sigma = \frac{1}{R}\frac{t}{A}.$$

σ: Ionic conductivity (S/cm)
R: Intersection of the impedance trajectory with the real axis
A: Area of the solid polymer electrolyte film

t: Thickness of the solid polymer electrolyte film

2) Measurement of Electrochemical Stability

Electrochemical stability was measured by preparing a coin cell with SUS as the working electrode and lithium metal as the counter electrode, with the prepared solid electrolyte film inserted between them. Linear Sweep Voltammetry (LSV) was performed up to 6 V at a scan rate of 10 mV/s for electrochemical evaluation. FIG. 2 shows the LSV measurement results of the solid electrolyte prepared in Example 1, and the electrochemical stability of Examples 1 to 5 and Comparative Examples 1 to 5 is summarized in Table 1.

3) Measurement of Lithium Transference Number (LTN)

The lithium cation mobility of the solid electrolytes prepared in the Examples and Comparative Examples was measured using an Ivium n-Stat electrochemical analyzer with an applied voltage of 10 mV. For the measurement, a symmetrical cell (Li/SPE/Li) was used, with the solid electrolyte placed between lithium metal disks. The LTN was calculated using the following Equation 2.

[Equation 2]

$$LTN = Iss(V - I_0R_0) / I_0(V - IssRss)$$

$I_0$: Initial current
Iss: Current after polarization
$R_0$: Resistance before polarization
Rss: Resistance after polarization

FIG. 3 shows an example of LTN measurement for Example 1, and the LTN values for Examples 1 to 5 and Comparative Examples 1 to 5 are summarized in Table 1.

[Table 1]

| Category | Mixing Ratio (Parts by Weight) | | | Ionic Conductivity (mS/cm) | Electrochemical Stability (V) | LTN |
|---|---|---|---|---|---|---|
| | Polythiourea (PTU) (Parts by Weight) | Multifunctional isocyanate (Parts by Weight) | Lithium Salt (Parts by Weight) | | | |
| Example 1 | 100 | 12.5 | 62.5 | 0.4 | 4.5 | 0.42 |
| Example 2 | 100 | 12.5 | 80 | 0.1 | 4.5 | 0.4 |
| Example 3 | 100 | 12.5 | 40 | 0.3 | 4.5 | 0.41 |
| Example 4 | 100 | 5 | 62.5 | 0.2 | 4.5 | 0.42 |
| Example 5 | 100 | 20 | 62.5 | 0.1 | 4.7 | 0.41 |
| Comparative Example 1 | 100 | 12.5 | 90 | 0.05 | 4.1 | 0.4 |
| Comparative Example 2 | 100 | 12.5 | 30 | 0.005 | 4.2 | 0.38 |
| Comparative Example 3 | 100 | 1 | 62.5 | ND | ND | ND |
| Comparative Example 4 | 100 | 30 | 62.5 | 0.003 | 4.5 | 0.33 |
| Category | Mixing Ratio (Parts by Weight) | | | Ionic Conductivity (mS/cm) | Electrochemical Stability (V) | LTN |
| | Ion-Conductive Polymer (PEO) (Parts by Weight) | | Lithium Salt (Parts by Weight) | | | |

(continued)

| | | | | | | |
|---|---|---|---|---|---|---|
| Comparative Example 5 | | 100 | 62.5 | 0.0006 | 4.2 | 0.32 |

As shown in Table 1, it may be observed that the solid electrolytes of Examples 1 to 5, prepared within the content range of the present disclosure, exhibit higher ionic conductivity than the solid electrolytes of Comparative Examples 1, 2, and 4, which fall outside the content range of the present disclosure. In addition, Comparative Example 3, with a very low isocyanate content, was found to have difficulty forming a film.

In addition, it may be seen that the solid electrolytes of Examples 1 to 5 have higher ionic conductivity than the solid electrolyte of Comparative Example 5. This is attributed to the amorphous nature between polymer chains due to the zigzag arrangement of thiourea, which facilitates segmental motion of the polymer chains, resulting in high ionic conductivity. In contrast, Comparative Example 1 exhibits low ionic conductivity, likely due to high crystallinity between polymer chains, which hinders lithium-ion transport.

Regarding electrochemical stability, it can be observed that the solid electrolytes of Examples 1 to 5, prepared within the content range of the present disclosure, exhibit electrochemical stability equal to or higher than that of the solid electrolytes of Comparative Examples 1, 2, and 4, which fall outside the content range of the present disclosure.

In addition, Examples 1 to 5 show relatively higher electrochemical stability compared to Comparative Example 5. This is believed to be due to the electrochemical stability of the polymer chains and the presence of a crosslinked structure, making them stable against oxidation-reduction reactions. In contrast, the polyethylene oxide-based electrolyte of Comparative Example 5, with hydroxyl groups at its terminals, is vulnerable to oxidation-reduction reactions, resulting in relatively lower electrochemical stability compared to the Examples.

In the LTN results, it may be observed that the solid electrolytes of Examples 1 to 5, prepared within the content range of the present disclosure, have LTN values equal to or higher than those of the solid electrolytes of Comparative Examples 1, 2, and 4, which fall outside the content range of the present disclosure.

In addition, Examples 1 to 5 exhibit relatively higher LTN compared to Comparative Example 5. This is believed to be due to the strong binding between the thiourea group and the anions of the lithium salt, which facilitates the dissociation of the lithium salt, making it easier for free lithium ions to exist stably, thus resulting in high LTN. In contrast, the electrolyte of Comparative Example 5 lacks functional groups within the polymer chain capable of binding with anions, making it more likely for the lithium salt to exist in ion-pair form, leading to lower LTN.

## Experimental Example 2: Measurement of Topology Freezing Transition Temperature

To quantitatively confirm whether the solid electrolyte of the present disclosure exhibits vitrimer properties, a dilatometry test was conducted in iso-stress mode using DMA with a TA Instruments DMA Q850. The solid electrolyte of Example 1 was cut into a film (approximately 30 mm (L) x 5 mm (W) x 0.5 mm (T)) and used as a test specimen. The specimen was cooled from room temperature to -20°C under a force of 1 kPa at a frequency of 1 Hz, then heated to 160°C at a rate of 3°C/min under a nitrogen atmosphere.

FIG. 4 is a graph showing the results of the dilatometry experiment. Referring to FIG. 4, it may be observed that the glass transition temperature (Tg) is identified around 28°C, and the topology freezing transition temperature (Tv) appears around 118°C.

The glass transition temperature (Tg) is the temperature at which segmental motion of the polymer chains occurs, transitioning from a rigid state to a glassy state. The topology freezing transition temperature (Tv) is the temperature at which rapid bond exchange occurs, causing the material to change from a viscoelastic solid to a viscoelastic liquid.

These results confirm distinct physical properties (transition temperatures) at different temperatures, demonstrating that the prepared solid electrolyte exhibits vitrimer behavior.

FIG. 5 is an image capturing the experimental process. As shown in FIG. 5, it may be confirmed that the solid electrolyte according to the present disclosure, after casting and complete solvent removal, can recover its initial shape through remolding. This confirms that the solid electrolyte of the present disclosure possesses self-healing capabilities.

Although the embodiments of the present disclosure have been described in detail above, the present disclosure is not limited to the above-described embodiments and the accompanying drawings, but is intended to be defined by the appended claims. Therefore, various substitutions, modifications, and changes may be made by those skilled in the art within the scope of the technical spirit of the present disclosure as described in the claims, and these are also considered to fall within the scope of the present disclosure.

## INDUSTRIAL APPLICABILITY

The lithium secondary battery including the solid polymer electrolyte according to the present disclosure exhibits excellent output characteristics at low temperatures, as well as superior electrochemical stability and safety, making it suitable for use in electric vehicles and similar applications.

## Claims

**1.** A solid electrolyte composition comprising:

an amine-based compound represented by the following Chemical Formula 1;
a multifunctional isocyanate; and
a lithium salt,
wherein the content of the lithium salt is 40 to 80 parts by weight based on 100 parts by weight of the amine-based compound.

[Chemical Formula 1]

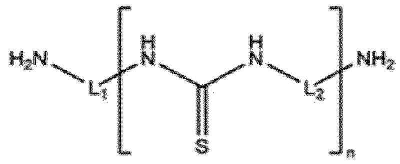

In Chemical Formula 1, each of $L_1$ and $L_2$ independently includes one or more selected from the group consisting of $C_1$-$C_{12}$ alkylene or heteroalkylene groups, $C_3$-$C_{16}$ cycloalkylene or cycloheteroalkylene groups, $C_6$-$C_{16}$ arylene or heteroarylene groups, and

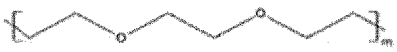;

n is a natural number in the range of 1 to 5,000; and m is a natural number in the range of 1 to 200.

**2.** The solid electrolyte composition of claim 1, wherein the multifunctional isocyanate is one or more selected from the group consisting of triphenylmethane-4,4,4-triisocyanate, 1,3,5-triisocyanato-2-methylbenzene, tris(6-isocyanatohexyl) isocyanurate, 1,3,5-triisocyanato-2,4,6-trimethylbenzene, and poly(hexamethylene diisocyanate).

**3.** The solid electrolyte composition of claim 1, wherein the content of the multifunctional isocyanate is 5 to 20 parts by weight based on 100 parts by weight of the amine-based compound.

**4.** The solid electrolyte composition of claim 1, wherein the lithium salt includes one or more selected from the group consisting of lithium bis(trifluoromethanesulfonyl)imide (LiTFSI), lithium perchlorate ($LiClO_4$), lithium nitrate ($LiNO_3$), and lithium hexafluorophosphate ($LiPF_6$).

**5.** A solid electrolyte comprising:
a cured product of the solid electrolyte composition of claim 1.

**6.** The solid electrolyte of claim 5, wherein the cured product exhibits at least two inflection points in a strain curve as a function of temperature, as measured by dilatometry.

**7.** The solid electrolyte of claim 5, the cured product has a topology freezing transition temperature (Tv) higher than its glass transition temperature (Tg), as measured by dilatometry.

**8.** A lithium secondary battery comprising:

the solid electrolyte according to any one of claims 5 to 7;
a cathode; and

an anode.

【Fig 1】

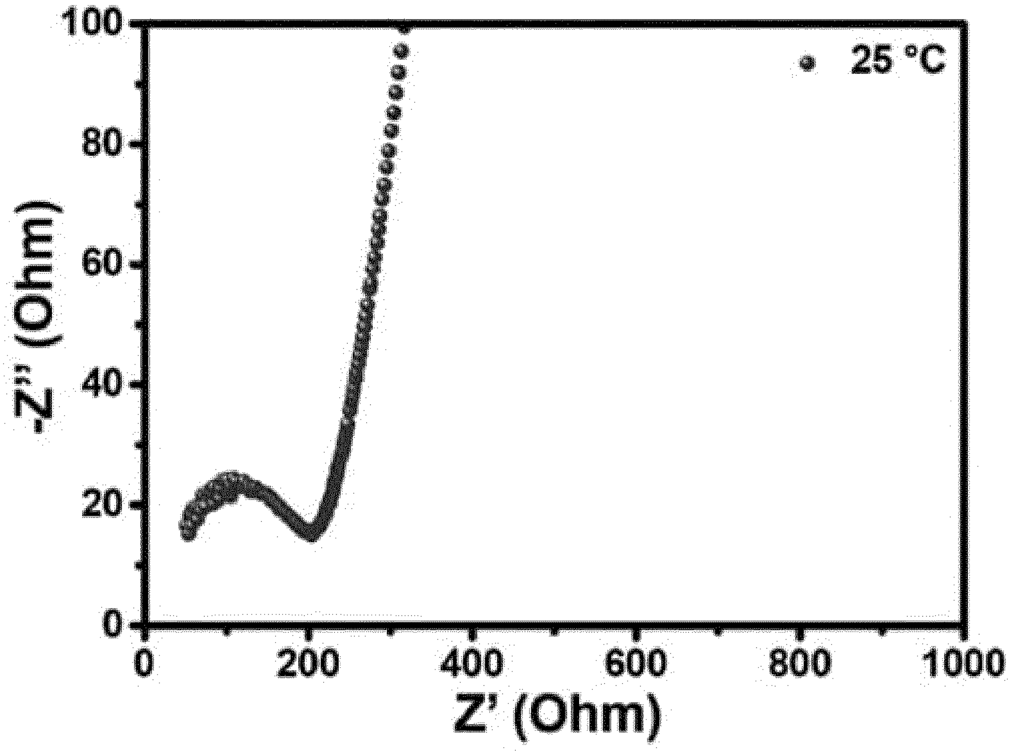

【Fig 2】

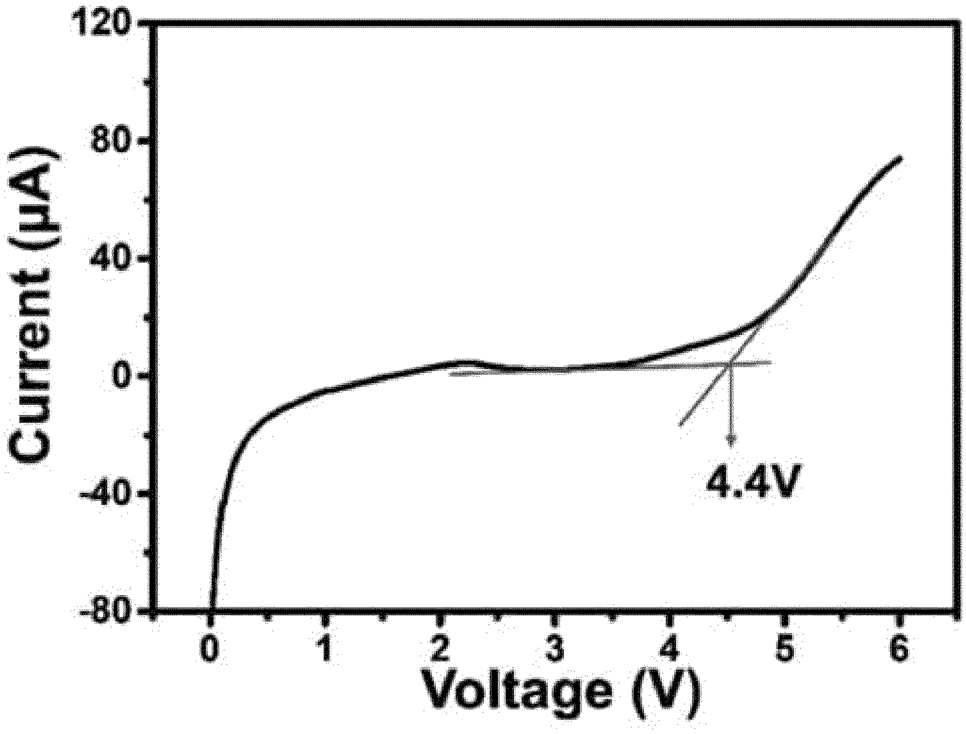

【Fig 3】

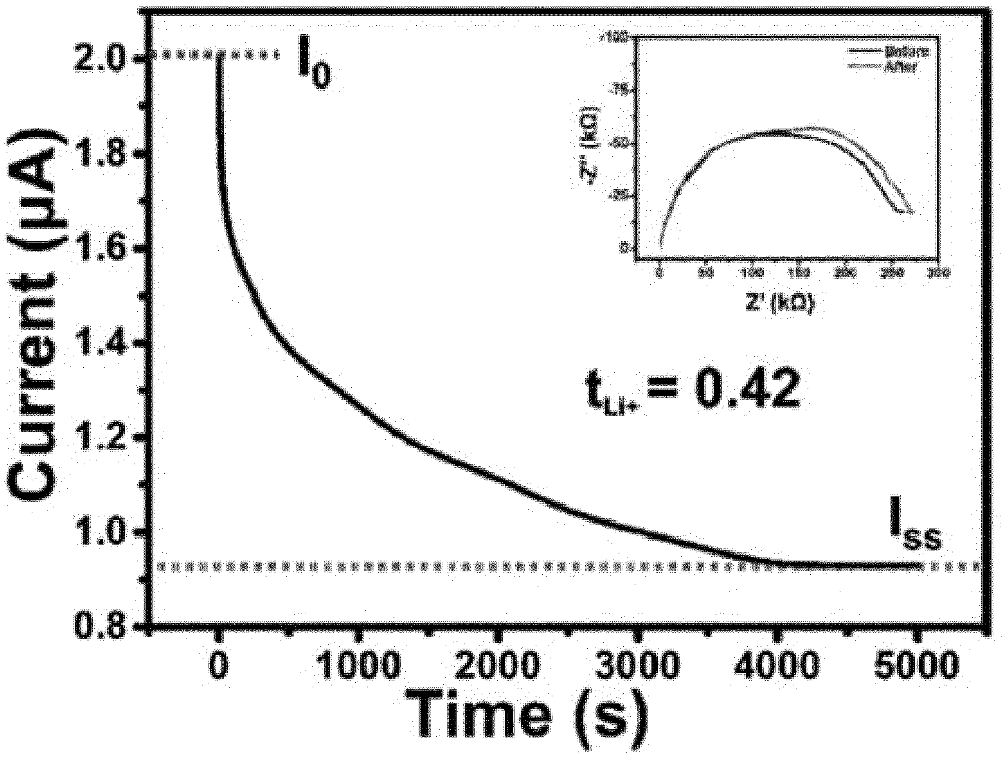

【Fig 4】

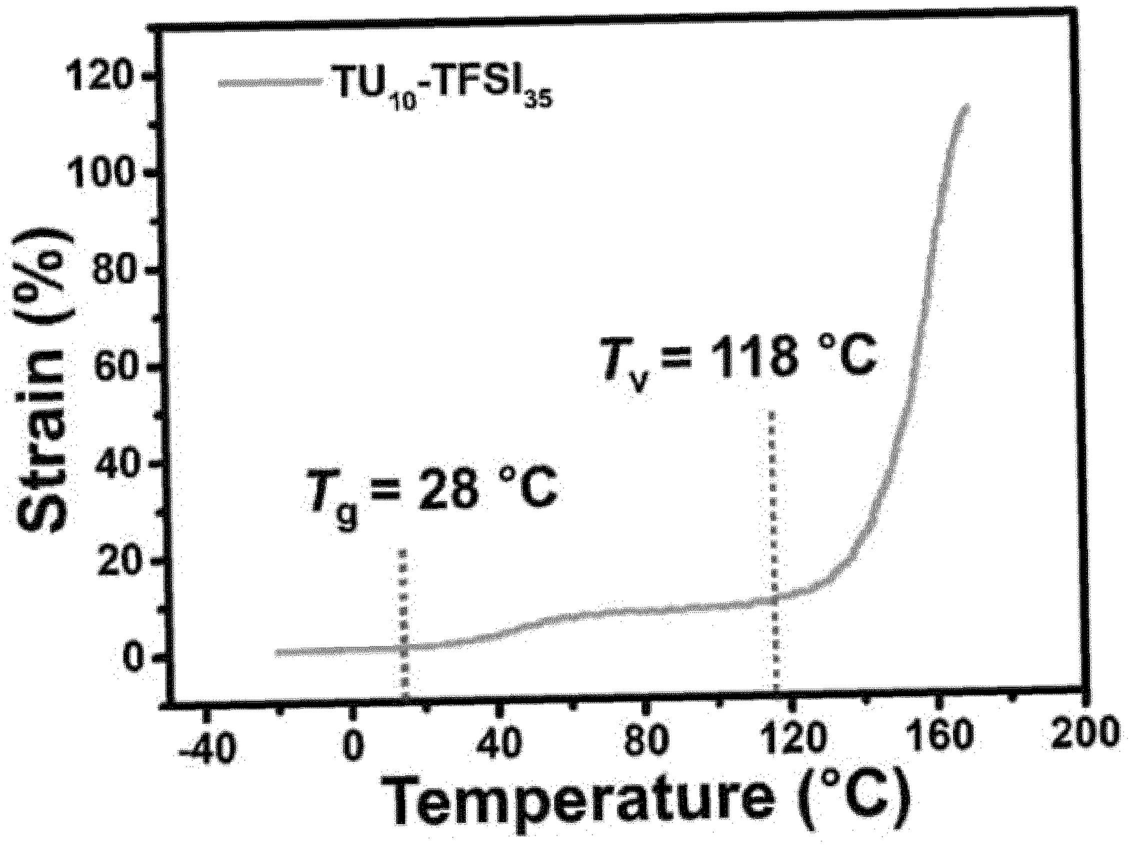
TU10-TFSI35
Strain (%)
Temperature (°C)
Tg = 28 °C
Tv = 118 °C
120
100
80
60
40
20
0
-40
0
40
80
120
160
200

【Fig 5】

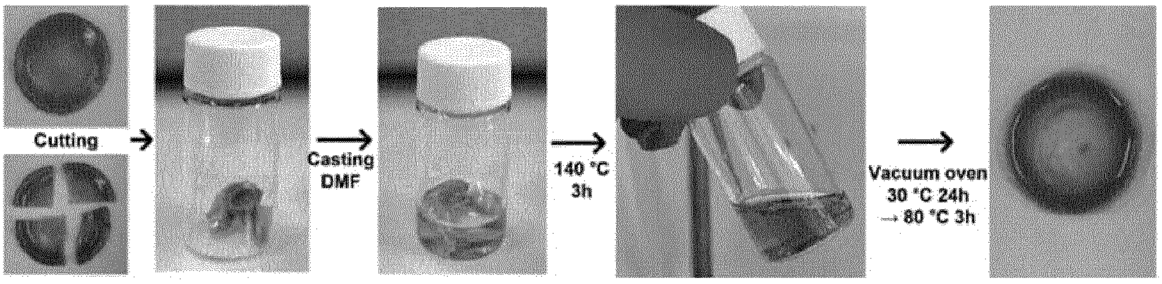

## INTERNATIONAL SEARCH REPORT

International application No.
**PCT/KR2023/014950**

### A. CLASSIFICATION OF SUBJECT MATTER

**H01M 10/0565**(2010.01)i; **H01M 10/052**(2010.01)i; **C08G 18/38**(2006.01)i; **C08G 18/48**(2006.01)i; **C08G 18/10**(2006.01)i; **C08G 18/72**(2006.01)i; **C08L 75/02**(2006.01)i

According to International Patent Classification (IPC) or to both national classification and IPC

### B. FIELDS SEARCHED

Minimum documentation searched (classification system followed by classification symbols)

H01M 10/0565(2010.01); C08F 220/10(2006.01); C08G 18/32(2006.01); C08J 5/22(2006.01); H01M 10/052(2010.01); H01M 10/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus, casreact) & keywords: 아민계 화합물(amine compound), 다관능성 이소시아네이트(multifunctional isocyanate), 리튬염(lithium salt), 고체전해질(solid electrolyte ), 리튬 이차전지(lithium secondary battery)

### C. DOCUMENTS CONSIDERED TO BE RELEVANT

| Category* | Citation of document, with indication, where appropriate, of the relevant passages | Relevant to claim No. |
|---|---|---|
| A | JP 2001-176555 A (SUNSTAR ENGINEERING INC. et al.) 29 June 2001 (2001-06-29)<br>See claims 1, 2 and 6. | 1-8 |
| A | JO, G. et al. Synthesis of polymer electrolytes based on poly (ethylene oxide) and an anion-stabilizing hard polymer for enhancing conductivity and cation transport. ACS macro letters. 2015, vol. 4, pp. 225-230.<br>See abstract; and figure 1. | 1-8 |
| A | SU, Y. et al. Binary network of conductive elastic polymer constraining nanosilicon for a high-performance lithium-ion battery. ACS nano. 2021, vol. 15, pp. 14570-14579.<br>See entire document. | 1-8 |
| A | KR 10-2019-0133534 A (LG CHEM, LTD.) 03 December 2019 (2019-12-03)<br>See entire document. | 1-8 |
| A | JP 2011-021176 A (KRI INC. et al.) 03 February 2011 (2011-02-03)<br>See entire document. | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 February 2024** | **06 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/014950**

**C. DOCUMENTS CONSIDERED TO BE RELEVANT**

| Category* | Citation of document, with indication, where appropriate, of the relevant passages | Relevant to claim No. |
|---|---|---|
| PX | KIM, B. et al. Ion conducting elastomer designed from thiourea-based dynamic covalent bonds with reprocessing capability. Materials today chemistry. 2023, [electronic publication] 26 May 2023, vol. 30, article no. 101583, pp. 1-9. See abstract; pages 2-3 and 7; and figure 1. | 1-8 |

Form PCT/ISA/210 (second sheet) (July 2022)

**INTERNATIONAL SEARCH REPORT**
**Information on patent family members**

International application No.
**PCT/KR2023/014950**

| Patent document cited in search report | Publication date (day/month/year) | Patent family member(s) | Publication date (day/month/year) |
|---|---|---|---|
| JP 2001-176555 A | 29 June 2001 | JP 4597294 B2 | 15 December 2010 |
| KR 10-2019-0133534 A | 03 December 2019 | KR 10-2510291 B1 | 14 March 2023 |
| JP 2011-021176 A | 03 February 2011 | CN 102459388 A | 16 May 2012 |
| | | CN 102459388 B | 19 March 2014 |
| | | EP 2444434 A1 | 25 April 2012 |
| | | EP 2444434 A4 | 27 March 2013 |
| | | EP 2444434 B1 | 10 September 2014 |
| | | JP 5736671 B2 | 17 June 2015 |
| | | US 2012-0094212 A1 | 19 April 2012 |
| | | US 9196391 B2 | 24 November 2015 |
| | | WO 2010-147044 A1 | 23 December 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230018141